# FASCICULE DE BREVET EUROPEEN

(11) **EP 0 976 482 B1**
(45) Date de publication et mention de la délivrance du brevet: **02.05.2003**
(21) Numéro de dépôt: 99401867.9
(22) Date de dépôt: 23.07.1999
(51) Int. Cl.: B23B 31/18, B25B 5/12

(54) **Dispositif de centrage et de serrage, notamment de pièces pour carrosserie automobile**
Zentrier- und Spannvorrichtung, insbesondere für Teile beim Wagenaufbau
Centering and clamping device, specially of pieces for car body

(30) Priorité: 27.07.1998 FR 9809549
(43) Date de publication de la demande: 02.02.2000
(73) Titulaire: Genus Technologies, 92320 Châtillon (FR)
(72) Inventeur: Morel, Michel, 95120 Ermont (FR); Roudier, Fabrice, 78820 Juziers (FR)
(74) Mandataire: Kaspar, Jean-Georges

(56) Documents cités:
- DE-U- 29 718 643
- FR-A- 2 733 930
- FR-A- 2 757 437
- US-A- 1 947 957
- US-A- 2 922 657

## Description

La mention est relative à un dispositif de centrage et de serrage, notamment pour pièces de carrosserie automobile, du type comportant un corps avec un moyen d'actionnement et portant des moyens de centrage et de serrage.

Dans la technique considérée, on utilise habituellement comme moyen d'actionnement un vérin hydraulique, un vérin pneumatique, un vérin électrique ou un moyen d'actionnement à distance pouvant transmettre des efforts au moyen d'un câble ou autre moyen de liaison souple approprié.

On connaît des moyens de positionnement ou de centrage, destinés à être insérés dans un orifice de positionnement d'une tôle de carrosserie ou d'une pièce pour la construction automobile.

On connaît également des moyens de serrage ou de maintien comportant un bras de serrage ou de maintien, dont la position de blocage est sensiblement perpendiculaire à l'axe de poussée du moyen d'actionnement.

Le document FR 2 733 930 décrit un dispositif d'indexation conforme au préambule de la revendication 1.

L'invention a pour but de perfectionner la technique connue, en proposant un nouveau dispositif de fabrication simple et économique assurant simultanément le centrage et le serrage d'une tôle ou d'une pièce pour carrosserie automobile.

L'invention a pour objet un dispositif de centrage et de serrage, notamment pour pièces de carrosserie automobile, du type comportant un corps contenant un moyen d'actionnement apte à actionner en combinaison au moins un organe de serrage escamotable et un organe de centrage contenant chaque organe de serrage escamotable à l'intérieur dudit organe de centrage, chaque organe de serrage présentant une extrémité formant un crochet s'étendant radialement extérieurement vers le bas, caractérisé par le fait que le dispositif comporte un moyen mécanique de renvoi de mouvement reliant le moyen d'actionnement et l'organe de centrage, le moyen d'actionnement étant directement relié aux organes de serrage, afin que le moyen d'actionnement, lors de son déplacement dans un premier sens, déplace les organes de serrage dans ledit premier sens de déplacement du moyen d'actionnement, et agisse sur le moyen mécanique de renvoi de mouvement pour déplacer l'organe de centrage dans le sens opposé audit premier sens de déplacement du moyen d'actionnement.

Selon d'autres caractéristiques de l'invention :
- l'organe de centrage présente une extrémité supérieure conique d'engagement, et une partie intermédiaire de centrage sensiblement cylindrique,
- le pivotement de chaque organe de serrage est commandé par un axe solidaire de l'organe de centrage,
- l'axe solidaire de l'organe de centrage est mobile par rapport au corps du dispositif,
- l'axe solidaire de l'organe de centrage est déplacé selon un mouvement opposé à celui du moyen d'actionnement,
- le dispositif comporte des crampons autobloquants,
- les crampons autobloquants sont pivotants autour d'axes solidaires du corps du dispositif,
- les crampons autobloquants coopèrent avec une pièce intermédiaire montée flottante,
- le déplacement de l'axe est assuré selon un mouvement opposé à celui du moyen d'actionnement, par l'intermédiaire d'une bielle montée pivotante sur une équerre de commande,
- l'équerre de commande est articulée à rotation sur un axe solidaire du corps, et comporte une lumière dans laquelle est positionnée un axe relié indirectement au moyen d'actionnement.

L'invention sera mieux comprise grâce à la description qui va suivre donnée à titre d'exemple non limitatif en référence aux dessins annexés dans lesquels :

La figure 1 représente schématiquement une vue en coupe par un plan médian d'un dispositif selon l'invention en position de centrage.

La figure 2 représente schématiquement une vue en coupe par un plan médian d'un dispositif de la figure 1 en position de commencement de serrage.

La figure 3 représente schématiquement une vue en coupe selon un plan médian d'un dispositif selon les figures 1 et 2 en position assurant simultanément le centrage et le serrage.

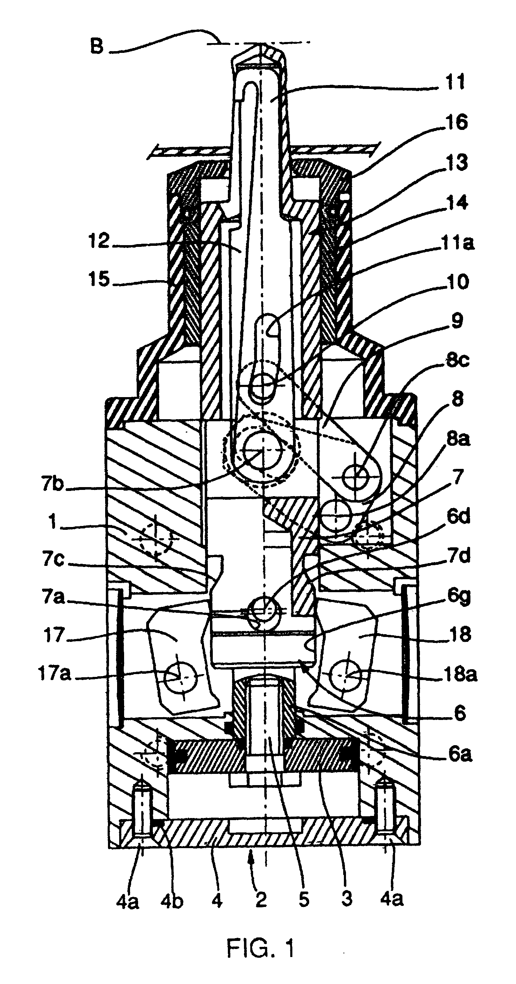

En référence aux figures 1 à 3, les éléments identiques ou fonctionnellement équivalents sont repérés par des chiffres de référence identique.

Sur la figure 1, un dispositif selon l'invention présente un corps 1 usiné en partie inférieure pour réaliser un vérin 2 avec un piston 3 et un couvercle d'obturation 4 fixé par des vis 4a avec interposition d'un joint d'étanchéité 4b approprié.

Le piston 3 est relié par une vis 5 à une pièce 6 intermédiaire présentant une tige 6a, une partie cylindrique intermédiaire 6b, et une partie supérieure 6c portant un axe 6d. La pièce 6 est montée au moins partiellement dans une pièce 7 déplaçable en translation et montée de manière flottante du fait que l'alésage 7a de la pièce 7 présente un diamètre supérieur à l'axe 6d de la pièce 6.

La pièce 7 porte un axe 7b qui est positionné dans une lumière d'une pièce basculante en forme d'équerre 8 articulée à rotation autour d'un axe 8a solidaire du corps 1. La pièce basculante 8 en forme d'équerre présente une lumière de commande et un axe 8c sur lequel est montée pivotante une bielle 9. La bielle 9 porte un axe 10 de commande qui glisse dans une lumière courbe ou en forme de ligne brisée 11a d'un organe de serrage 11. De préférence, le dispositif comporte deux organes de serrage 11 et 12 de manière à assurer un serrage symétrique d'une tôle ou pièce de carrosserie.

Les organes de serrage 11 et 12 sont escamotables dans un organe de centrage 13 présentant une extrémité supérieure conique d'engagement 13a et une partie intermédiaire 13b sensiblement cylindrique.

Les organes de serrage 11, 12 contenus dans les organes de centrage 13 sont montés coulissant dans une bague 14 montée dans un corps supérieur 15 coiffé par un organe protecteur 16 avec interposition d'un joint racleur.

Dans la position de la figure 1, le dispositif est en position basse B, dans laquelle on peut insérer une tôle par-dessus l'organe de centrage 13. Les griffes 11 et 12 sont escamotées à l'intérieur de l'organe de centrage 13, du fait que l'axe 10 est placé dans la position basse et inclinée du chemin de commande 1 la de l'organe 11, et 12a de l'organe 12. L'axe 7b et l'organe 7 se trouvent en position haute, du fait que le piston 3 du vérin et la pièce 6 qui lui est directement reliée, se trouvent en position haute. Dans cette position, l'axe 6d appuie sur le bord supérieur de l'alésage 7a de la pièce 7.

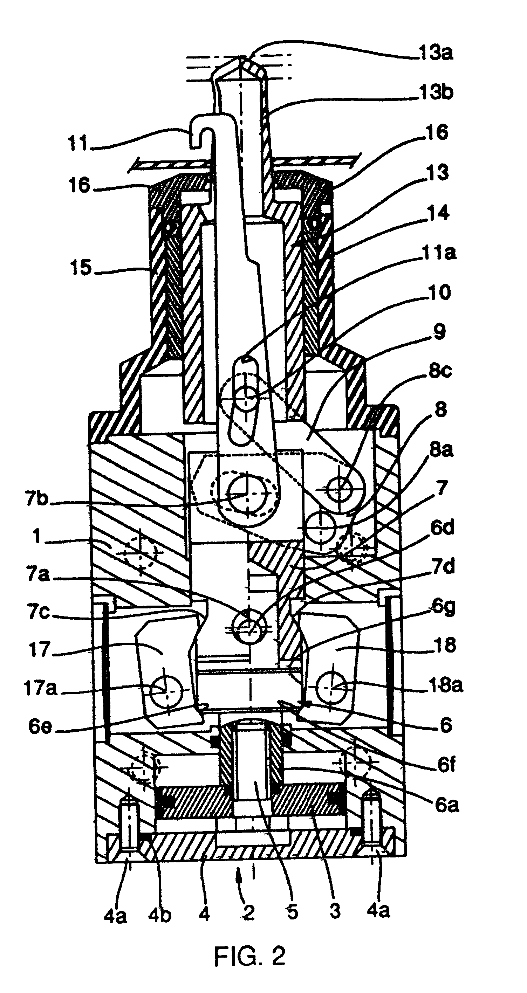

Pour la position de la figure 1, la position de figure 2, on admet l'air comprimé dans la chambre supérieure du vérin, de manière à provoquer le déplacement du piston 3 vers le bas. Dans la position intermédiaire de la figure 2, l'axe 6d et la pièce 6 se sont déplacés vers le bas jusqu'à la position dans laquelle l'axe 6d appuie sur le bord inférieur de l'alésage 7a et provoque le déplacement de la pièce 7 vers le bas. L'axe 7b provoque le basculement de l'équerre de commande 8 en tirant sur celle-ci par coopération avec la lumière 8b. Ce basculement de l'équerre 8 provoque la montée de la bielle 9, de l'axe 10, et de la pièce 13 dont l'axe 10 est solidaire, ainsi que la sortie des organes 11 et 12 du fait de la circulation de l'axe 10 dans le chemin 11a.

Lorsque le mouvement du piston 3 vers le bas est terminé, l'équerre de commande 8 a presque totalement basculé vers le bas et l'axe 10 de la bielle 9 est presque à l'extrémité du chemin 11a en provoquant la sortie totale, en même temps que la descente des organes de serrage 11 et 12 présentant chacun une extrémité formant un crochet s'étendant radialement, extérieurement, et vers le bas. En même temps, l'organe 13 sur lequel est monté l'axe 10 a été sorti dans sa position la plus élevée H, cette position haute H étant plus élevée que la position basse B d'une hauteur comprise entre 2 et 30 mm.

La tôle ou pièce de carrosserie est par conséquent serrée entre les crochets des organes 11 et 12 qui l'appliquent sur l'organe de protection 16 et elle est centrée par la partie cylindrique de l'organe de centrage 13 qui est sorti d'une hauteur correspondant à la distance comprise entre les hauteurs B et H.

Selon une variante préférée de l'invention, on prévoit des crampons autobloquants 17,18 articulés par rotation autour d'axes 17a, 18a solidaires du corps 1. Dans la position de la figure 1, les crampons 17, 18 sont ouverts et n'empêchent pas le déplacement des pièces 6 et 7.

Dans la position de la figure 2, les crampons 17, 18 commencent à se resserrer en s'engageant dans des rampes 7c, 7d pratiquées sur la pièce 7, le déplacement des crampons 17, 18 étant commandé par des chanfreins 6e, 6f appuyant sur les bords inférieurs des crampons 17, 18.

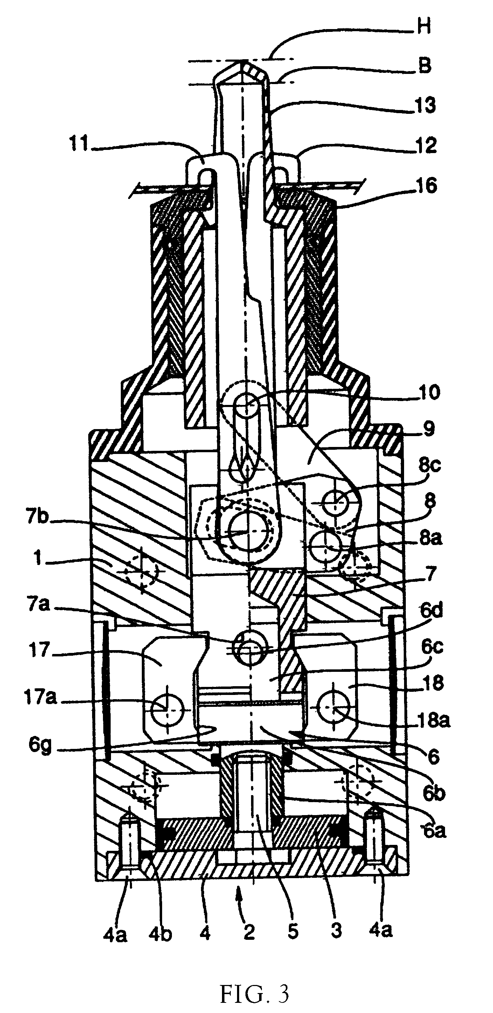

Dans la position de la figure 3, les crampons 17, 18 sont verrouillés en position dans les rampes 7c, 7d (figure 2) du fait de l'immobilisation des crampons maintenus par les surfaces par exemple planes de leurs extrémités inférieures en appui sur le pourtour cylindrique 6g de la partie 6b cylindrique de la pièce 6 : dans cette position, même en cas de manque d'air comprimé ou d'incidents sur le circuit de commande, les crampons 17, 18 verrouillés dans les rampes 7c, 7d empêchent tout desserrage du dispositif selon l'invention.

En particulier, l'équerre de commande 8 pourrait être remplacée par une autre pièce de commande articulée à rotation sur un axe espacé de l'axe longitudinal de translation des pièces mobiles du dispositif, à savoir l'axe de symétrie de la pièce 6.

## Revendications

1. Dispositif de centrage et de serrage, notamment pour pièces de carrosserie automobile, du type comportant un corps (1) contenant un moyen (2) d'actionnement apte à actionner en combinaison au moins un organe de serrage (11, 12) escamotable et un organe de centrage (13) contenant chaque organe de serrage (11, 12) escamotable à l'intérieur dudit organe de centrage (13), chaque organe de serrage (11, 12) présentant une extrémité formant un crochet s'étendant radialement extérieurement vers le bas, **caractérisé par le fait que** le dispositif comporte un moyen mécanique (8) de renvoi de mouvement reliant le moyen (2) d'actionnement et l'organe de centrage (13), le moyen (2) d'actionnement étant directement relié aux organes (11, 12) de serrage, afin que le moyen (2) d'actionnement, lors de son déplacement dans un premier sens, déplace les organes de serrage (11, 12) dans ledit premier sens de déplacement du moyen d'actionnement, et agisse sur le moyen mécanique (8) de renvoi de mouvement pour déplacer l'organe de centrage (13) dans le sens opposé audit premier sens de déplacement du moyen d'actionnement.

2. Dispositif selon la revendication 1, **caractérisé en ce que** l'organe de centrage (13) présente une extrémité supérieure conique d'engagement, et une partie intermédiaire de centrage (13b) sensiblement cylindrique.

3. Dispositif selon la revendication 1 ou la revendication 2, **caractérisé en ce que** le pivotement de chaque organe de serrage (11 ou 12) est commandé par un axe (10) solidaire de l'organe de centrage (13).

4. Dispositif selon la revendication 3, **caractérisé en ce que** l'axe (10) solidaire de l'organe de centrage (13) est mobile par rapport au corps (1) du dispositif.

5. Dispositif selon la revendication 4, **caractérisé en ce que** l'axe (10) solidaire de l'organe de centrage (13) est déplacé selon un mouvement opposé à celui du moyen d'actionnement (2, 3).

6. Dispositif selon l'une quelconque des revendications précédentes, **caractérisé en ce que** le dispositif comporte des crampons autobloquants (17, 18)

7. Dispositif selon la revendication 6, **caractérisé en ce que** les crampons autobloquants (17, 18) sont pivotants autour d'axes (17a, 18a) solidaires du corps (1) du dispositif.

8. Dispositif selon la revendication 6 ou la revendication 7, **caractérisé en ce que** les crampons autobloquants (17, 18) coopèrent avec une pièce intermédiaire (7) montée flottante.

9. Dispositif selon la revendication 3, **caractérisé en ce que** le déplacement de l'axe (10) est assuré selon un mouvement opposé à celui du moyen d'actionnement (2, 3), par l'intermédiaire d'une bielle (9) montée pivotante sur une équerre de commande (8).

10. Dispositif selon la revendication 9, **caractérisé en ce que** l'équerre de commande (8) est articulée à rotation sur un axe (8a) solidaire du corps (1), et comporte une lumière dans laquelle est positionné un axe (7b) relié indirectement au moyen d'actionnement (2, 3).

## Patentansprüche

1. Zentrier-und Spannvorrichtung, insbesondere für Kraftfahrzeugkarroserieteile mit einer in einem Gehäuse (1) angeordneten Betätigungseinrichtung (2), mit der sich in Kombination wenigstens ein einziehbares Klemmorgan (11, 12) und ein Zentrierorgan (13), in dem das wenigstens eine Klemmorgan (11, 12) einziehbar angeordnet ist, betätigen lassen, wobei jedes Klemmorgan (11, 12) einen Endbereich in Form einer sich radial nach außen und unten erstreckenden Kralle aufweist, **dadurch gekennzeichnet, daß** die Vorrichtung eine mechanische Bewegungsübertragungseinrichtung (8), die die Betätigungseinrichtung (2) und das Zentrierorgan (13) verbindet, aufweist, direkt mit den Klemmorganen (11, 12) verbunden ist, wobei die Betätigungseinrichtung (2) die Klemmorgane (11, 12) bei der Bewegung der Betätigungseinrichtung (2) in eine erste Richtung in diese erste Richtung ebenfalls bewegt und auf die mechanische Bewegungsübertragungseinrichtung (8) in der Weise wirkt, daß das Zentrierorgan (13) entgegengesetzt zur ersten Richtung der Bewegung der Betätigungseinrichtung (2) bewegt wird.

2. Vorrichtung nach Anspruch 1, **dadurch gekennzeichnet, daß** das Zentrierorgan (13) eine obere, konische Führungsspitze (13 a) und ein im wesentlichen zylindrisches Zwischenstück (13 b) zum Zentrieren aufweist.

3. Vorrichtung nach Anspruch 1 oder 2, **dadurch gekennzeichnet, daß** das Schwenken eines jeden Klemmorgans (11 oder 12) durch einen am Zentrierorgan (13) befestigten Stift (19) bewirkt wird.

4. Vorrichtung nach Anspruch 3, **dadurch gekennzeichnet, daß** der am Zentrierorgan (13) befestigte Stift (10) gegenüber dem Gehäuse (1) der Vorrichtung beweglich ist.

5. Vorrichtung nach Anspruch 4, **dadurch gekennzeichnet, daß** der Stift am Zentrierorgan (13) befestigte Stift (10) in eine Richtung entgegengesetzt zur Richtung der Betätigungseinrichtung (2, 3) bewegt wird.

6. Vorrichtung nach irgendeinem der vorhergehenden Ansprüche, **dadurch gekennzeichnet, daß** die Vorrichtung selbsthemmende Krallen (17, 18) aufweist.

7. Vorrichtung nach Anspruch 61, **dadurch gekennzeichnet, daß** die selbsthemmenden Krallen (17, 18) um am Gehäuse (1) angeordnete Achsen (17 a, 18 a) schwenkbar sind.

8. Vorrichtung nach Anspruch 6 oder 7, **dadurch gekennzeichnet, daß** die selbsthemmenden Krallen (17, 18) mit einem schwimmend angeordneten Zwischenstück (7) zusammen wirken.

9. Vorrichtung nach Anspruch 3, **dadurch gekennzeichnet, daß** die Bewegung des Stifts (10) in einer zur Betätigungseinrichtung (2, 3) entgegengesetzten Richtung mittels eines schwenkbar auf einem Winkelhebel (8) angeordneten Lenkers (9) bewirkt wird.

10. Vorrichtung nach Anspruch 9, **dadurch gekennzeichnet, daß** der Winkelhebel (8) drehbar auf einer am Gehäuse (1) befestigten Achse (8 a) gelagert ist und eine längliche Öffnung aufweist, in der ein indirekt mit der Betätigungseinrichtung (2, 3) verbundener Stift (7 b) angeordnet ist.

## Claims

1. A centring and clamping device, in particular for parts of an automotive body, of the type having a body (1) containing an actuation means (2) intended for actuating in combination at least one retractable clamping member (11, 12) and a centring member (13) containing each clamping member (11, 12), which may be retracted inside the said centring member (13), each clamping member (11, 12) having an end forming a hook that extends radially outwardly downwards, **characterised in that** the device has a mechanical return movement means (8) connecting the actuation means (2) and the centring member (13), the actuation means (2) being directly connected to the clamping members (11, 12) so that the actuation means (2), on being displaced in a first direction, displaces the clamping members (11, 12) in the said first direction of displacement of the actuation means, and acts on the mechanical return movement means (8) to displace the centring member (13) in the opposite direction to the said first direction of displacement of the actuation means.

2. A device according to Claim 1, **characterised in that** the centring member (13) has a conical upper end for engagement and a substantially cylindrical intermediate centring part (13b).

3. A device according to Claim 1 or Claim 2, **characterised in that** pivoting of each clamping member (11 or 12) is controlled by a pin (10) attached to the centring member (13).

4. A device according to Claim 3, **characterised in that** the pin (10) attached to the centring member (13) is movable with respect to the body (1) of the device.

5. A device according to Claim 4, **characterised in that** the pin (10) attached to the centring member (13) is displaced in a movement opposed to that of the actuation means (2, 3).

6. A device according to any one of the preceding claims, **characterised in that** the device has self-locking chucks (17, 18).

7. A device according to Claim 6, **characterised in that** the self-locking chucks (17, 18) are pivotal about pins (17a, 18a) attached to the body (1) of the device.

8. A device according to Claim 6 or Claim 7, **characterised in that** the self-locking chucks (17, 18) cooperate with an intermediate part (7) mounted in floating manner.

9. A device according to Claim 3, **characterised in that** displacement of the pin (10) is provided in a movement opposed to that of the actuation means (2, 3) by way of a connecting rod (9) mounted pivotally on a control bracket (8).

10. A device according to Claim 9, **characterised in that** the control bracket (8) is articulated to rotate on a pin (8a) attached to the body (1), and has an opening in which there is positioned a pin (7b) connected indirectly to the actuation means (2, 3).
